# EUROPEAN PATENT APPLICATION

(11) **EP 3 524 060 A1**
(43) Date of publication of application: **14.08.2019**
(21) Application number: 17858672.3
(22) Date of filing: 27.09.2017
(51) Int. Cl.: A23L 2/40, A23L 2/52, A23L 2/42

(54) **ALLULOSE-CONTAINING CARBONATED WATER AND PREPARATION METHOD THEREFOR**

(30) Priority: 07.10.2016 KR 20160130096
(71) Applicant: CJ Cheiljedang Corporation, Seoul 04560 (KR)
(72) Inventor: SHIM, Dong Seok, Yongin-si Gyeonggi-do 16868 (KR); KIM, Su-Jeong, Suwon-si Gyeonggi-do 16509 (KR); BAK, Youn-Kyung, Suwon-si Gyeonggi-do 16698 (KR); PARK, Jung Gyu, Incheon 22187 (KR); BYUN, Sung Bae, Sejong 30083 (KR); LEE, In, Suwon-si Gyeonggi-do 16507 (KR); CHOI, Jong Min, Suwon-si Gyeonggi-do 16567 (KR); PARK, Seung Won, Yongin-si Gyeonggi-do 16894 (KR); JUNG, Dong Chul, Seoul 06779 (KR)
(74) Representative: Robson, Aidan John
(86) International application number: PCT/KR2017/010721
(87) International publication number: WO 2018/066878

(57) **Abstract**

Aerated water comprising allulose and a method of preparing the same are disclosed.

## Description

### Field of the Invention

The present invention relates to an aerated water comprising allulose and a method of preparing the same.

### Description of the Related Art

The human body has a water content of about 70% to 80% and consists mostly of water. Water is essential to life and humans need to be properly hydrated to maintain homeostasis. Particularly, normal activity requires a minimum of 1 to 1.5 L of water per day. Water intake is done by drinking water directly or through intake of foods or beverages, and, particularly, consumer needs for aerated water have recently increased.

Aerated water contains carbonic acid and is free from calorific saccharides. Aerated water is free of any energy source and thus can allow a person to enjoy a refreshing sense and palatability of carbonic acid without concern of an excess of calories or obesity. However, aerated water does not contain typical saccharides (such as sugar, fructose, glucose, and lactose) and can cause acridity and thus deterioration in preference. In addition, since carbonic acid evaporates quickly, sensory properties are likely to considerably deteriorate due to reduction in carbonic acid content once an aerated water bottle is opened.

The present inventors have made efforts to develop a material capable of overcoming such problems. As a result, the present inventors found that, when allulose is added to aerated water, it is possible to improve taste of aerated water and to enhance solubility of carbonic acid in aerated water and retention of carbon dioxide pressure, and thus completed the present invention.

### Disclosure

### Technical Problem

It is one aspect of the present invention to provide an aerated water comprising water, carbonic acid, and allulose.

It is another aspect of the present invention to provide a method of preparing an aerated water, a method of improving taste of an aerated water, and a method of maintaining carbon dioxide pressure of an aerated water, which comprise: (i) (a) adding allulose to water and (b) adding carbonic acid to the resulting product of the step (a); or (ii) adding allulose to water containing the carbonic acid.

### Technical Solution

One aspect of the present invention relates to an aerated water comprising water, carbonic acid, and allulose.

As used herein, "aerated water" refers to water in which carbonic acid (i.e., carbon dioxide, H₂CO₃, HCO₃⁻, CO₃²⁻) is dissolved and may include water naturally containing carbonic acid, natural carbonic acid-containing water with carbonic acid further added thereto, and water having carbonic acid added thereto.

As used herein, "water" may include purified water, refined water, ground water, or ion-containing drinking water. However, it should be understood that the present invention is not limited thereto and the water may include any suitable water that can be converted into aerated water. The purified water may include purified water obtained by ion-exchange purification of tap water or purified water obtained by filtering ground water, without being limited thereto. The ion-containing drinking water refers to drinking water in which salts are dissolved and ionized.

The aerated water may be free from at least one selected from the group consisting of saccharides other than allulose, synthetic sweeteners, organic acids, edible pigments, caffeine, and preservatives.

The aerated water may have a pH of 4.0 to 6.0.

The aerated water may be colorless and transparent.

The allulose may be present in an amount of 0.1 parts by weight to 5.0 parts by weight relative to 100 parts by weight of the aerated water. Specifically, the allulose may be present in an amount of 0.3 parts by weight to 5.0 parts by weight, 0.5 parts by weight to 5.0 parts by weight, 1.2 parts by weight to 5.0 parts by weight, 3.0 parts by weight to 5.0 parts by weight, 0.3 parts by weight to 4.0 parts by weight, 0.5 parts by weight to 4.0 parts by weight, 1.2 parts by weight to 4.0 parts by weight, 3.0 parts by weight to 4.0 parts by weight, 0.3 parts by weight to 3.0 parts by weight, 0.5 parts by weight to 3.0 parts by weight, or 1.2 parts by weight to 3.0 parts by weight, relative to 100 parts by weight of the aerated water.

The aerated water may have improved properties in terms of carbon dioxide solubility or carbon dioxide pressure retention. Specifically, the aerated water may have a carbon dioxide pressure of 2.5 kg/cm² to 4.5 kg/cm², 3.0 kg/cm² to 4.5 kg/cm², 3.3 kg/cm² to 4.5 kg/cm², 3.5 kg/cm² to 4.5 kg/cm², 3.8 kg/cm² to 4.5 kg/cm², 2.5 kg/cm² to 4.4 kg/cm², 3.0 kg/cm² to 4.4 kg/cm², 3.3 kg/cm² to 4.4 kg/cm², 3.5 kg/cm² to 4.4 kg/cm², or 3.8 kg/cm² to 4.4 kg/cm², as measured at 20°C.

The aerated water may have a carbon dioxide pressure retention rate of 84% or more, specifically 85% or more, 87% or more, or 89% or more as measured after exposure to air at 20°C for 20 minutes, compared to the carbon dioxide pressure at the time of exposure to air. In another embodiment, the aerated water may have a carbon dioxide pressure retention rate of 89% or more, 90% or more, 91% or more, or 92% or more as measured after exposure to air at 20°C for 15 minutes, compared to the carbon dioxide pressure at the time of exposure to air. In a further embodiment, the aerated water may have a carbon dioxide pressure retention rate of 93% or more, 94% or more, or 95% or more as measured after exposure to air at 20°C for 10 minutes, compared to the carbon dioxide pressure at the time of exposure to air. In yet another embodiment, the aerated water may have a carbon dioxide pressure retention rate of 97% or more, 98% or more, or 99% or more as measured after exposure to air at 20°C for 5 minutes, compared to the carbon dioxide pressure at the time of exposure to air.

The aerated water may have improved taste. Here, improvement in taste may include reduction in acridity, off-taste, and/or off-flavor.

The aerated water may further comprise a flavoring agent. The flavoring agent may be present in an amount of 0.01% by weight (wt%) to 5 wt%, 0.01 wt% to 3 wt%, or 0.01 wt% to 0.3 wt%, based on the total weight of the aerated water. The flavoring agent may be a natural flavoring agent or a synthetic flavoring agent. The natural flavoring agent may be obtained by processing fruits, vegetables, medicinal plants or other plants through any typical method known in the art. The natural flavoring agent may include an ingredient separated from a natural material through steam distillation, squeezing, juicing, or extraction (e.g., water or ethanol extraction). The flavoring agent may be a flavoring agent comprising at least one flavor selected from the group consisting of coffee, black tea, green tea, oolong tea, cocoa, herb, fruits, lime, grape, apple, lemon, strawberry, raspberry, corn, orange, kumquat, tangerine, cinnamon, grapefruit, peach, apricot, pear, apple, pineapple, cranberry, blackberry, magnolia berry, matrimony vine, blueberry, blackcurrant, pomegranate, acai berry, banana, mango, guava, watermelon, dragon fruit, durian, melon, Japanese apricot, kiwi, plum, dried plum, chokeberry, papaya, radish, bell pepper, red bell pepper, watercress, parsley, cauliflower, cabbage, Brussel sprout, cabbage, kale, *angelica utilis*, spinach, red beet, broccoli, pumpkin, celery, lettuce, tomato, carrot, leek, onion, green onion, pepper, aloe, cactus, elk clover, dandelion, hemp, ginger, corn, *caragana sinica*, ladybell, mushrooms, bellflower root, *codonopsis lanceolate, hovenia dulcis,* kudzu, red ginseng, and ginseng. The flavoring agent may be present in an amount of 0.01 wt% to 5 wt%, specifically, 0.01 wt% to 3 wt%, more specifically 0.01 wt% to 0.3 wt%, based on the total weight of the aerated water.

The aerated water may further comprise at least one component selected from the group consisting of minerals, salts, electrolytes or amino acids. When the water included in the aerated water according to the present invention is natural mineral water, this component may originate from the natural mineral water.

The aerated water may have a calorie content of less than 5 kcal/100 ml, specifically less than 4 kcal/100 ml, less than 3 kcal/100 ml, less than 2 kcal/100 ml, less than 1 kcal/100 ml, or less than 0.5 kcal/100 ml. More specifically, the aerated water may have a calorie content of higher than or equal to 0.1 kcal/100 ml and less than 5 kcal/100 ml, less than 4 kcal/100 ml, less than 3 kcal/100 ml, less than 2 kcal/100 ml, less than 1 kcal/100 ml, or less than 0.5 kcal/100 ml.

In accordance with another aspect of the present invention, a method of preparing an aerated water, a method of improving taste of an aerated water, or a method of maintaining carbon dioxide pressure of an aerated water comprises: (i) (a) adding allulose to water and (b) adding carbonic acid to the resulting product of the step (a); or (ii) adding allulose to water containing carbonic acid.

The allulose may be present in an amount of 0.1 parts by weight to 5.0 parts by weight relative to 100 parts by weight of the aerated water. Specifically, the allulose may be present in an amount of 0.3 parts by weight to 5.0 parts by weight, 0.5 parts by weight to 5.0 parts by weight, 1.2 parts by weight to 5.0 parts by weight, 3.0 parts by weight to 5.0 parts by weight, 0.3 parts by weight to 4.0 parts by weight, 0.5 parts by weight to 4.0 parts by weight, 1.2 parts by weight to 4.0 parts by weight, 3.0 parts by weight to 4.0 parts by weight, 0.3 parts by weight to 3.0 parts by weight, 0.5 parts by weight to 3.0 parts by weight, or 1.2 parts by weight to 3.0 parts by weight, relative to 100 parts by weight of the aerated water.

The carbonic acid added to the water or the allulose-containing water may be produced using a carbonic acid generator.

Addition of the carbonic acid may be performed at 0°C to 10°C, 2°C to 7°C, or 3°C to 6°C.

The aerated water prepared by the method according to the present invention may have a carbon dioxide pressure retention rate of 84% or more, specifically 85% or more, 87% or more, or 89% or more as measured after exposure to air at 20°C for 20 minutes, compared to the carbon dioxide pressure at the time of exposure to air. In another embodiment, the aerated water may have a carbon dioxide pressure retention rate of 89% or more, 90% or more, 91% or more, or 92% or more as measured after exposure to air at 20°C for 15 minutes, compared to the carbon dioxide pressure at the time of exposure to air. In a further embodiment, the aerated water may have a carbon dioxide pressure retention rate of 93% or more, 94% or more, or 95% or more, as measured after exposure to air at 20°C for 10 minutes, compared to the carbon dioxide pressure at the time of exposure to air. In yet another embodiment, the aerated water may have a carbon dioxide pressure retention rate of 97% or more, 98% or more, or 99% or more as measured after exposure to air at 20°C for 5 minutes, compared to the carbon dioxide pressure at the time of exposure to air.

The method may further comprise, after addition of the allulose, mixing or stirring the product resulting from adding the allulose. Here, mixing or stirring may be performed for 10 to 60 minutes, 20 to 60 minutes, 10 to 50 minutes, 20 to 50 minutes, 10 to 40 minutes, or 20 to 40 minutes.

In the method, the water, the carbonic acid, the allulose, and the carbon dioxide pressure are the same as described in the above aspect.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit and scope of the invention. The scope of the present invention should be defined by the appended claims and equivalents thereof.

The present invention provides an aerated water which includes allulose and thus can have improved taste, particularly reduced acridity, off-flavor, and off-taste, thereby improving consumer preference.

In addition, according to the present invention, it is possible to increase solubility of carbonic acid in the aerated water and to prevent reduction in carbon dioxide pressure over time.

### Brief Description of Drawings

FIG. 1 is a graph depicting initial carbon dioxide pressure values of aerated water samples prepared in Examples and Comparative Examples. Herein, * indicates an aerated water sample of Examples having a significant difference from a corresponding aerated water sample of Comparative Examples (statistical analysis: T-test group comparison, *p <0.05).
FIGs. 2 to 7 are graphs depicting time-dependent carbon dioxide pressure retention rate of aerated water samples prepared in Examples and Comparative Examples (statistical analysis: T-test group comparison, *p <0.05).

### Detailed Description of the Invention

Next, the present invention will be described in more detail with reference to examples. However, it should be noted that these examples are provided for illustration only and should not be construed in any way as limiting the invention.

Unless otherwise stated, "%" used to indicate concentration of a certain substance refers to % by weight/weight for solid/solid, % by weight/volume for solid/liquid, and % by volume/volume for liquid/liquid, throughout the specification of the present invention.

### Preparative Example 1: Preparation of aerated water

Liquid allulose (CJ CheilJedang, 95% or more of allulose in terms of dried solid content) or sugar (CJ CheilJedang, White Sugar) was added to purified water in amounts as listed in Table 1, followed by stirring for 30 minutes using a magnetic stirrer. After the resulting mixture was cooled to 5°C, a maximum amount of carbon dioxide was injected into 1 L of the cooled mixture using a carbon dioxide injector (Delight Soda Chef, including an injection container/Zahm & Nagel #9000-R PILOT PLANT), thereby preparing aerated water samples of Comparative Examples 2 to 6 and Examples 1 to 5. An aerated water sample of Comparative Example 1 was prepared by injecting carbon dioxide as in Comparative Examples 2 to 6 and Examples without addition of allulose or sugar. Each of the prepared aerated water samples was packed in a pressure resistant PET bottle, followed by sealing, and then stored in a refrigerator (at 5°C).

**Table 1**

| Item | Purified water (wt%) | Allulose (dried solid, wt%) | Sugar (dried solid, wt%) |
|---|---|---|---|
| Comparative Example 1 | 100.0 | 0 | 0 |
| Comparative Example 2 | 99.7 | - | 0.3 |
| Comparative Example 3 | 99.5 | - | 0.5 |
| Comparative Example 4 | 98.8 | - | 1.2 |
| Comparative Example 5 | 98.0 | - | 2.0 |
| Comparative Example 6 | 97.0 | - | 3.0 |
| Example 1 | 99.7 | 0.3 | - |
| Example 2 | 99.5 | 0.5 | - |
| Example 3 | 98.8 | 1.2 | - |
| Example 4 | 98.0 | 2.0 | - |
| Example 5 | 97.0 | 3.0 | - |

### Experimental Example 1: Sensory properties of allulose-containing aerated water

Sensory evaluation was performed on each of the samples of Examples 1 to 5 and Comparative Examples 1 to 6 by examining sensory properties (acridity, sweetness, overall preference) of each sample in 30 panel members. In sensory evaluation, each of the aerated water samples was poured into a tasting cup with a random number added thereto to get rid of preconceptions, followed by evaluation on a 9-point scale. Measurement results were statistically analyzed by analysis of variance (ANOVA) and then were post-tested by Duncan's multiple range test, thereby analyzing storage time-dependent significance.

As a result, it was confirmed that the aerated water samples of Examples 1 to 5 had sweetness similar to the aerated water samples of Comparative Examples 2 to 6 and exhibited significantly reduced off-taste/off flavor intensity and significantly enhanced refreshing sensation and overall preference. In addition, it was confirmed that the aerated water samples of Examples 1 to 5 had considerably reduced acridity, as compared with the aerated water sample of Comparative Example 1. Particularly, it was confirmed that the aerated water samples of Examples 3 to 5 had significantly reduced acridity, as compared with the aerated water samples of Comparative Example 4 to 6, prepared by adding sugar in the same amount as allulose (Tables 2 to 6).

**Table 2**

| Item | Sweetness intensity | | |
|---|---|---|---|
| | Comparative Example 1 | Comparative Example 2 | Example 1 |
| Average | 0.97^{B} | 2.37^{A} | 2.4^{A} |
| Item | Comparative Example 1 | Comparative Example 3 | Example 2 |
| Average | 1.03^{B} | 2.7^{A} | 2.77^{A} |
| Item | Comparative Example 1 | Comparative Example 4 | Example 3 |
| Average | 0.93^{B} | 3.03^{A} | 3^{A} |
| Item | Comparative Example 1 | Comparative Example 5 | Example 4 |
| Average | 0.83^{B} | 4.03^{A} | 3.87^{A} |
| Item | Comparative Example 1 | Comparative Example 6 | Example 5 |
| Average | 0.77^{B} | 4.13^{A} | 3.93^{A} |

**Table 3**

| Item | Acridity intensity | | |
|---|---|---|---|
| | Comparative Example 1 | Comparative Example 2 | Example 1 |
| Average | 6.03^{A} | 3.7^{B} | 3.17^{B} |
| Item | Comparative Example 1 | Comparative Example 3 | Example 2 |
| Average | 6.23^{A} | 4.03^{B} | 3.3^{B} |
| Item | Comparative Example 1 | Comparative Example 4 | Example 3 |
| Average | 6.3^{A} | 4.4^{B} | 3.33^{C} |
| Item | Comparative Example 1 | Comparative Example 5 | Example 4 |
| Average | 6.4^{A} | 4.47^{B} | 3.17^{C} |
| Item | Comparative Example 1 | Comparative Example 6 | Example 5 |
| Average | 6.5^{A} | 4.37^{B} | 3.07^{C} |

**Table 4**

| Item | Off- taste/off- flavor intensity | | |
|---|---|---|---|
| | Comparative Example 1 | Comparative Example 2 | Example 1 |
| Average | 4.83^{A} | 4.73^{A} | 4.13^{B} |
| Item | Comparative Example 1 | Comparative Example 3 | Example 2 |
| Average | 4.97^{A} | 4.83^{A} | 4.23^{B} |
| Item | Comparative Example 1 | Comparative Example 4 | Example 3 |
| Average | 5.03^{A} | 4.97^{A} | 4.17^{B} |
| Item | Comparative Example 1 | Comparative Example 5 | Example 4 |
| Average | 5.07^{A} | 5.03^{A} | 3.97^{B} |
| Item | Comparative Example 1 | Comparative Example 6 | Example 5 |
| Average | 5.23^{A} | 5.17^{A} | 3.83^{B} |

**Table 5**

| Item | Refreshing sensation intensity | | |
|---|---|---|---|
| | Comparative Example 1 | Comparative Example 2 | Example 1 |
| Average | 6.13^{B} | 5.87^{B} | 6.67^{A} |
| Item | Comparative Example 1 | Comparative Example 3 | Example 2 |
| Average | 6.13^{B} | 5.83^{B} | 6.77^{A} |
| Item | Comparative Example 1 | Comparative Example 4 | Example 3 |
| Average | 6.1^{B} | 5.73^{B} | 6.87^{A} |
| Item | Comparative Example 1 | Comparative Example 5 | Example 4 |
| Average | 5.93^{B} | 5.63^{B} | 6.97^{A} |
| Item | Comparative Example 1 | Comparative Example 6 | Example 5 |
| Average | 5.97^{B} | 5.67^{B} | 7.07^{A} |

**Table 6**

| Item | Overall preference | | |
|---|---|---|---|
| | Comparative Example 1 | Comparative Example 2 | Example 1 |
| Average | 6.37^{BC} | 6.13^{C} | 6.7^{AB} |
| Item | Comparative Example 1 | Comparative Example 3 | Example 2 |
| Average | 6.03^{B} | 6.2^{B} | 6.8^{A} |
| Item | Comparative Example 1 | Comparative Example 4 | Example 3 |
| Average | 5.87^{B} | 6.1^{B} | 6.77^{A} |
| Item | Comparative Example 1 | Comparative Example 5 | Example 4 |
| Average | 5.73^{B} | 5.87^{B} | 6.77^{A} |
| Item | Comparative Example 1 | Comparative Example 6 | Example 5 |
| Average | 5.43^{B} | 5.9^{B} | 6.87^{A} |

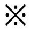 Each of the letters (A, B, C) denotes a group of results on the same line and the presence of a different letter means that there is a significant difference (p < 0.05).

### Experimental Example 2: Carbon dioxide solubility and carbon dioxide pressure retention rate of allulose-containing aerated water

### 2-1. Carbon dioxide solubility

Initial carbon dioxide pressure of each of the aerated water samples of Examples 1 to 5 and Comparative Examples 1 to 6 prepared in Preparative Example 1 was measured to determine carbon dioxide solubility. Specifically, the initial carbon dioxide pressure was measured three times using a carbon dioxide pressure meter (Series 6000, Zahm & Nagel Co., Inc.) in accordance with the gas pressure test specified in the Korean Food Code (section 18-2.(1), 2016).

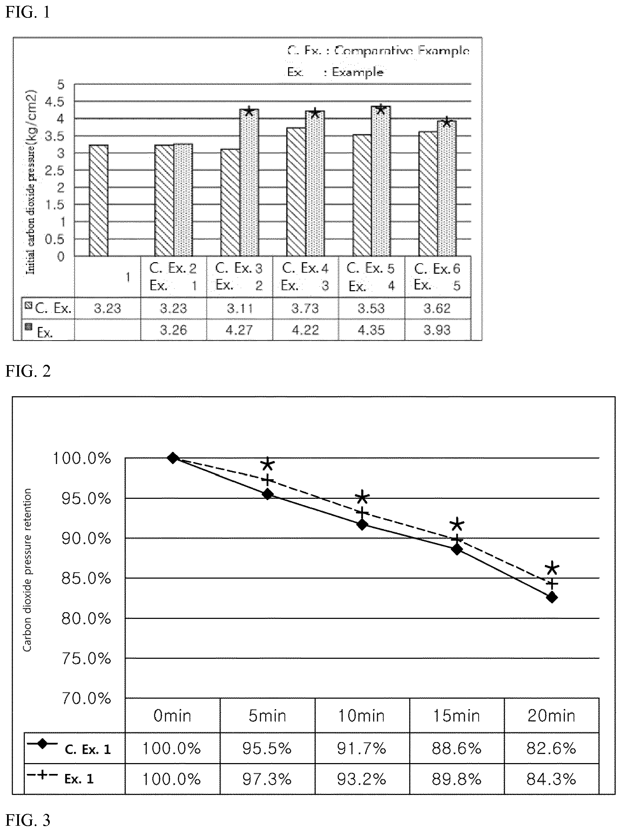

As a result, it was confirmed that the aerated water samples of Examples 2 to 5 had significantly high initial carbon dioxide pressure, as compared with the aerated water samples of Comparative Examples 1 to 6. Therefore, it can be seen that the allulose-containing aerated water according to the present invention exhibited higher carbon dioxide solubility than the aerated water sample free from saccharide (Comparative Example 1) and the aerated water samples prepared by adding sugar (Comparative Examples 2 to 6) (see FIG. 1).

### 2-2. Carbon dioxide pressure retention

Carbon dioxide pressure of each of the samples was measured at predetermined points of time (after 5, 10, 15, and 20 minutes after preparation). Specifically, the carbon dioxide pressure was measured at 20°C at each of the predetermined points of time while repeating a procedure in which, after the carbon dioxide pressure was measured once, carbon dioxide gas was removed from the aerated water by opening a snifter valve of the carbon dioxide pressure meter, and then the valve was closed such that carbon dioxide dissolved in the aerated water could be re-eluted to generate carbon dioxide pressure.

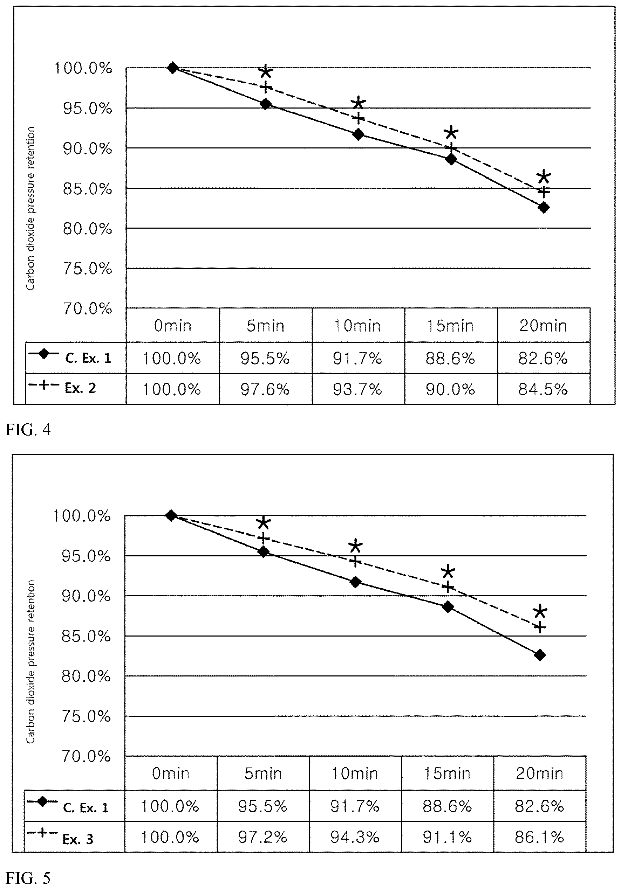

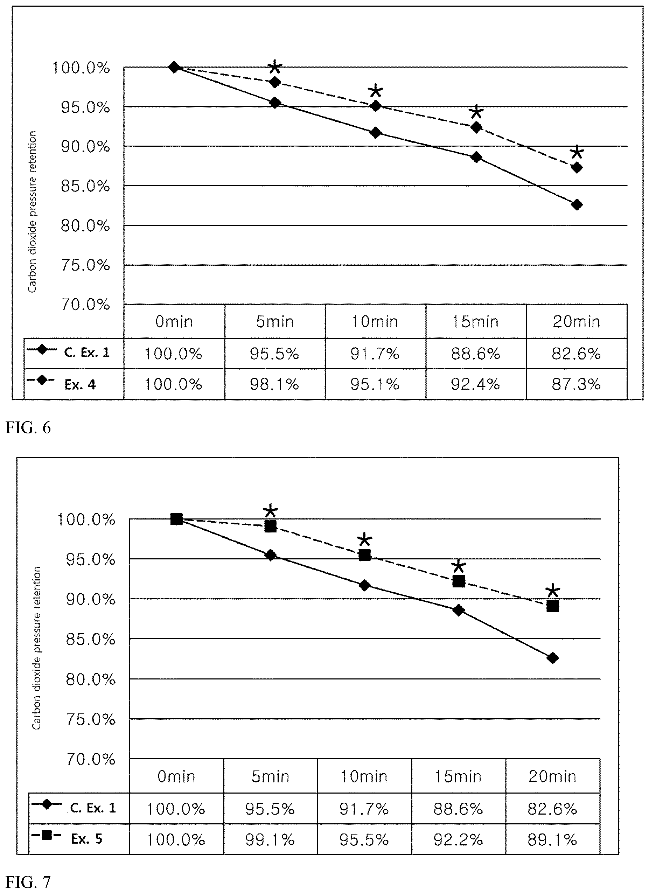

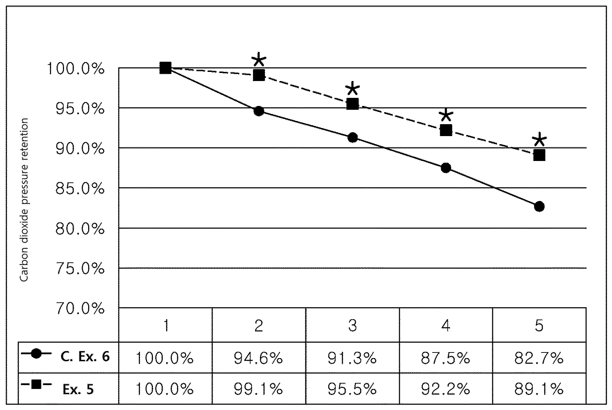

As a result, it was confirmed that the aerated water samples of Examples 1 to 5 exhibited significantly high carbon dioxide pressure retention, as compared with the aerated water samples of Comparative Examples 1 to 6. Therefore, it can be seen that addition of allulose to aerated water can prolong the time for which carbon dioxide was retained (captured) by the aerated water (see Figs 2 to 7).

## Claims

1. An aerated water comprising water, carbonic acid and allulose.

2. The aerated water according to claim 1, wherein the aerated water is free from at least one selected from the group consisting of saccharides other than allulose, synthetic sweeteners, organic acids, edible pigments, caffeine, and preservatives.

3. The aerated water according to claim 1, wherein the allulose is present in an amount of 0.1 parts by weight to 5.0 parts by weight relative to 100 parts by weight of the aerated water.

4. The aerated water according to claim 1, wherein the aerated water has improved properties in terms of carbon dioxide solubility or carbon dioxide pressure retention.

5. The aerated water according to claim 1, wherein the aerated water has a carbon dioxide pressure of 2.5 kg/cm² to 4.5 kg/cm² at 20°C.

6. The aerated water according to claim 1, wherein the aerated water has a carbon dioxide pressure retention rate of 84% or more as measured after exposure to air at 20°C for 20 minutes, compared to the carbon dioxide pressure at the time of exposure to air.

7. The aerated water according to claim 1, wherein the aerated water has improved taste.

8. The aerated water according to claim 1, wherein the improvement in taste is reduction in acridity, off-taste, or off-flavor.

9. A method of preparing an aerated water, comprising: (i) (a) adding allulose to water and (b) adding carbonic acid to the resulting product of the step (a); or (ii) adding allulose to water containing carbonic acid.

10. A method of improving taste of an aerated water, comprising: (i) (a) adding allulose to water and (b) adding carbonic acid to the resulting product of the step (a); or (ii) adding allulose to water containing carbonic acid.

11. A method of maintaining carbon dioxide pressure of an aerated water, comprising: (i) (a) adding allulose to water and (b) adding carbonic acid to the resulting product of the step (a); or (ii) adding allulose to water containing carbonic acid.

12. The method according to any one of claims 9 to 11, wherein the allulose is present in an amount of 0.1 parts by weight to 5.0 parts by weight relative to 100 parts by weight of the aerated water.
